# EUROPÄISCHE PATENTANMELDUNG

(11) **EP 0 547 494 A1**
(43) Veröffentlichungstag der Anmeldung: **23.06.1993**
(21) Anmeldenummer: 92121000.1
(22) Anmeldetag: 09.12.1992
(51) Int. Cl.: B02C 18/14, B02C 4/08, B02C 19/18

(54) **Zerkleinerung von bahnförmigem Material**

(30) Priorität: 19.12.1991 DE 4142054
(71) Anmelder: Linde Aktiengesellschaft, D-65189 Wiesbaden (DE)
(72) Erfinder: Schiffbauer, Reiner, Dipl.-Ing., W-8190 Wolfratshausen (DE); Blanke, Martin, Dipl.-Ing., W-8012 Riemerling (DE)
(74) Vertreter: Schaefer, Gerhard, Dr.

(57) **Zusammenfassung**

Es wird ein Verfahren zum Zerkleinern von bahnförmigem Material mittels Walzen vorgeschlagen, bei dem erfindungsgemäß das bahnförmige Material zwischen Walzen mit ineinandergreifendem Zahnradprofil eingezogen und zerkleinert wird. Durch die Zahnradprofilierung der Walzen wird auf das Brechgut nicht nur Druck- sondern auch Walk- und Biegebelastung ausgeübt, die zu einer Zerkleinerung und Trennung der Einzelkomponenten des Materials führen. Bei elastischen Materialien ist eine Versprödung durch tiefkalte Gase vor der Zerkleinerung vorgesehen.

## Beschreibung

Die Erfindung betrifft ein Verfahren zum Zerkleinern von bahnförmigem Material mittels Walzen.

Zur Zerkleinerung verschiedener Materialien werden oft Walzenbrecher eingesetzt, die das Brechgut mittels Druckbeanspruchung zerkleinern. Das Material wird zwischen zwei Walzen eingezogen, wobei zur Erhöhung der Reibung beim Einzug die Walzenoberfläche meist rauh ausgestaltet ist, indem sie eine leicht nocken- oder pyramidenförmige Profilierung trägt. Dem Zerkleinerungsprozeß kann sich eine Trennung der Komponenten des zerkleinerten Brechguts anschließen.

Bahnförmiges Material besteht oft aus einer faserigen Basisstruktur mit Ummantelung. Die Ummantelungskomponenten bleiben bei den bisherigen Zerkleinerungsverfahren mittels Walzen jedoch zum großen Teil in gebrochenem Zustand an dem faserigen Träger haften und können deshalb nachfolgend nicht von diesem getrennt werden. Bei geringer Faserstärke wird der faserige Träger an den Bruchstellen durchtrennt, so daß eine anschließende Abtrennung der Ummantelungskomponeneten kaum möglich wird.

Aufgabe vorliegender Erfindung ist es deshalb, ein verbessertes Zerkleinerungsverfahren für bahnförmiges Material zu entwickeln, das insbesondere bei Verbundwerkstoffen eine zufriedenstellende Zerkleinerung bewirkt.

Diese Aufgabe wird erfindungsgemäß dadurch gelöst, daß das bahnförmige Material zwischen Walzen mit ineinandergreifendem Zahnradprofil eingezogen und zerkleinert wird.

Durch das erfindungsgemäße Verfahren wird auf das in die Walzen eingezogene bahnförmige Material neben der Druckbeanspruchung auch eine starke Biege- und Walkbeanspruchung ausgeübt. Letztere ist für die effektive Zerkleinerung des bahnförmigen Materials verantwortlich. Reine Druckbeanspruchung führt insbesondere bei faserverstärkten bahnförmigen Materialien lediglich zu Brüchen, nicht aber zur Ablösung des Umhüllungsmaterials.

Erfindungsgemäß wird das bahnförmige Material beispielsweise zwischen einem Paar von Walzen mit ineinandergreifendem Zahnradprofil eingezogen, wobei diesem Paar auch noch ein oder mehrere weiter Paare gleicher Walzen nachgeschaltet sein können. Dabei erübrigt sich für die zweite Walze eines solchen Walzenpaares ein eigener Antrieb, da diese durch die erfindungsgemäß ineinandergreifende Zahnradprofilierung zwangsweise von der ersten Walze mitgeführt wird.

Das bahnförmige Material wird von den Walzen zusammengedrückt und von dem Zahnradprofil gebogen und gewalkt, wodurch es gebrochen und zerkleinert wird. Insbesondere bei faserverstärkten Verbundwerkstoffen ergibt sich der bedeutende Vorteil, daß die zerkleinerten Komponenten der Umhüllung sich von dem faserigen Trägermaterial ablösen. Dadurch wird es möglich, die Fasern fast in Originalgröße zurückzuerhalten, während das feinzerkleinerte Umhüllungsmaterial von den Fasern getrennt werden kann.

Dabei kann es vorteilhaft sein, wenn das bahnförmige Material vor dem Einzug in die Walzen durch Temperaturabsenkung versprödet wird. Das Umhüllungsmaterial von Verbundwerkstoffen ist oft elastisch. Elastische Materialien verlieren im kalten Zustand ihre Elastizität und lassen sich erst dann zerkleinern.

Dabei kann sinnvollerweise das bahnförmige Material mit einem tiefkalten verflüssigten Gas, vorzugsweise Stickstoff, beaufschlagt werden. Der bei -196°C verflüssigte Stickstoff wird mittels Düsen auf das elastische Material gesprüht. Das derart versprödete Material platzt teilweise ab oder auf und kann mit dem erfindungsgemäßen Verfahren optimal zerkleinert werden.

Weiterhin ist es vorteilhaft, wenn die Komponenten des zerkleinerten bahnförmigen Materials durch Siebung, magnetisches Sortieren oder Sichtung getrennt werden. Die voneinander getrennten Einzelkomponenten des bahnförmigen Materials können dann teilweise recycelt, anderenteils entsorgt werden. Hier ist insbesondere an die Anwendung des erfindungsgemäßen Verfahrens auf Zuschnittabfälle von Karkassenrohmaterial aus der Reifenindustrie gedacht.

Weiterhin ist es sinnvoll, wenn an den Walzen anhaftendes Material mittels über die Walzen streifender Bürsten abgelöst wird.

Niedrig versprödende Werkstoffe mit klebrigem Charakter neigen zum Anhaften am Walzenprofil, wodurch die nachfolgende Zerkleinerung an Wirksamkeit einbüßt. Rotierende Bürstwerkzeuge oder Abstreifkämme können je nach Art der Zahnradprofilierung die Walzen von anhaftendem Brechgut befreien.

Im folgenden soll ein Ausführungsbeispiel das erfindungsgemäße Verfahren näher erläutern.

Bei der Reifenherstellung fallen Zuschnittabfälle an, für die eine Wiederaufbereitung angestrebt wird. Das Karkassenrohmaterial besteht aus parallel angeordneten Drahtarmierungen, die von einer Kautschukschicht umhüllt ist. Die Drahtstruktur ist fest und biegsam. Der Kautschuk soll von diesem Träger in zerkleinertem Zustand abgetrennt werden. Kautschuk und Draht können dann wieder zu Rohmaterialien aufbereitet werden.

Erfindungsgemäß wird das bahnförmige Karkassenmaterial mit verflüssigtem Stickstoff versprödet, wobei der Kautschuk seine Elastizität verliert, der Draht hingegen biegsam bleibt. Walzen mit ineinandergreifendem Zahnradprofil ziehen das versprödete Material ein und zerkleinern es. Der versprödete Kautschuk löst sich zerkleinert vom Drahtgeflecht, der Draht selbst bleibt größtenteil unzerkleinert. Mittels magnetischer Sortierung läßt sich der Draht absondern und die Kautschukstücke können dem Kautschukrohmaterial wieder zugeführt werden.

Durch das erfindungsgemäße Verfahren lassen sich insbesondere Verbundwerkstoffe, auch solche mit elastischer Umhüllung, sowohl zerkleinern als auch vom Trägermaterial abtrennen.

## Patentansprüche

1. Verfahren zum Zerkleinern von bahnförmigem Material mittels Walzen, **dadurch gekennzeichnet**, daß das bahnförmige Material zwischen Walzen mit ineinandergreifendem Zahnradprofil eingezogen und zerkleinert wird.

2. Verfahren nach Anspruch 1, dadurch gekennzeichnet, daß das bahnförmige Material vor dem Einzug in die Walzen durch Temperaturabsenkung versprödet wird.

3. Verfahren nach Anspruch 2, dadurch gekennzeichnet, daß das bahnförmige Material mit einem tiefkalten verflüssigten Gas, vorzugsweise Stickstoff, beaufschlagt wird.

4. Verfahren nach einem der Ansprüche 1 bis 3, dadurch gekennzeichnet, daß die Komponenten des zerkleinerten bahnförmigen Materials durch Siebung, magnetisches Sortieren oder Sichtung getrennt werden.

5. Verfahren nach einem der Ansprüche 1 bis 4, dadurch gekennzeichnet, daß an den Walzen anhaftendes Material mittels über die Walzen streifender Bürsten abgelöst wird.

6. Anwendung des Verfahrens nach einem der Ansprüche 1 bis 5 auf Verbundwerkstoffe.
